# EUROPEAN PATENT APPLICATION

(11) **EP 1 885 134 A1**
(43) Date of publication of application: **06.02.2008**
(21) Application number: 06015919.1
(22) Date of filing: 31.07.2006
(51) Int. Cl.: H04N 7/64

(54) **A communication system for video data and a method for distributing video data over a network**

(71) Applicant: Fondazione Torino Wireless, 10129 Torino (IT); POLITECNICO DI TORINO, 10129 Torino (IT)
(72) Inventor: Olmo, Gabriella, 10025 Pino Torinese (TO) (IT); Grangetto, Marco, 100664 Pinerolo (TO) (IT); Tillo, Tammam, 10125 Torino (IT)
(74) Representative: Grünecker, Kinkeldey, Stockmair & Schwanhäusser Anwaltssozietät

(57) **Abstract**

According to the present invention there is provided a communication system for video data, said system comprising a "Multiple Description Coding" (MDC) system, adapted to generate, for each frame or slice of a video sequence, at least one "Primary Slice Description" (PSD) (21) and one or more "Redundant Slice Description" (RSD) (22), said system being further adapted to interlace said plurality of PSD and RSD descriptions, so as to generate a corresponding plurality of "Video Descriptions" (VDs) adapted to be transmitted to a plurality of clients and/or users of a communication network over a plurality of communication paths.

## Description

### FIELD OF THE PRESENT INVENTION

The present invention relates to the field of video communication. In particular, the present invention relates to a system for distributing, storing and streaming video data. In more detail, the present invention relates to a distributed video storage and streaming system, which is compliant with the H.264 video coding standard, whereas the storage and streaming system can be deployed by means of overlay networks providing the required functionalities. According to the present invention, a system is proposed for the purpose of storing and retrieving videos from a network, wherein said system is based on the multiple description coding technology, that disseminates video contents over distributed servers. Accordingly, download from multiple sources can be performed, thus reducing links overload and hotspot areas without penalizing download speed. Moreover, the present invention relates to a communication method for video data, according to which videos are distributed over a communication network, allowing users of said communication network to efficiently retrieve and download videos.

### DESCRIPTION OF THE PRIOR ART

Video coding is the field in computer science that deals with finding efficient coding formats for digital video. An important area of this field is video compression. Video compression refers to making a digital video signal using compressed data, without noticeably reducing the quality of the picture. In particular, most video compression techniques are based on a hybrid approach comprising predictive motion compensation and transform coding. Predictive motion compensation removes the temporal redundancy while transform coding removes the spatial redundancy. Motion compensation is a way of describing the differences between consecutive frames of a video in terms of where each section of the former frame has moved. The video sequence consists of a number of pictures, usually called frames. Subsequent frames are very similar, thus containing a lot of redundancy.

The goal is to remove the redundancy to gain better compression ratios. A typical approach is to approximate the motion of the whole scene and the objects of a video sequence. The motion is described by some parameters that have to be encoded in the bit-stream. The pixels of the predicted frame are approximated by appropriately translated pixels of the reference frame. Usually, the frames are processed in groups. Usually, the video frames are divided into *Group of Pictures* (GOP); the GOP represents a coding units that can be decoded independently, i.e. without references to frames belonging to other GOPs. The first frame in a GOP is encoded without motion compensation using the transform coding approach. The frame is called *I-frame* or *I-picture.* The other frames in the GOP are called P-*frames* or *P-pictures* and are predicted from the *I-frame* or *P-frames* that have been coded previously. Another typical class of predicted picture is represented by the Bi-directional frames called *B-frame or B-picture;* in this latter case the prediction can be obtained by averaging the predictions obtained using two different previously decoded reference regions. Usually, *B-frames* are not used as reference for other frames and therefore the decoder can skip them without causing prediction errors. The prediction schemes are, for instance, described as IPPPP, meaning that a GOP consists of one *I-frame* followed by four *P-frames.* However, the presence of the prediction loop makes the compressed data very sensitive to errors due to the phenomenon of error propagation. As a consequence, video transmission or streaming over networks subject to packed losses is very challenging. In order to overcome this vulnerability, the use of multiple description coding (MDC) has been proposed, where different non hierarchical representations (or descriptions) of the same data, yielding mutually refinable information, are generated in order to be transmitted over independent paths. Multiple description coding is a coding technique, which codes a single media stream into minimally two independent descriptions. Any, or an arbitrary combination, of these descriptions on the decoder side are used to reconstruct the media stream. Quality improves with the number of correctly received descriptions. Its main advantage, over real time single description (SD) video coding, is its robustness to errors in an unreliable network. Another advantage of MDC is the possibility to store the video content in a distributed version, i.e. the descriptions are saved to different hard discs not necessarily residing in the same device, thus making the system fault tolerant.

The most popular methods to generate MD are based on the pioneering MD scalar quantizer (MDSQ); this principle has been applied in particular to video coding. Another class of methods employs correlating transforms; this approach has been applied to motion compensated MD video coding.

These methods, also providing good performance, are conceived as stand alone codecs (a codec is a device or program capable of performing encoding and decoding on a digital data stream or signal), and are incompatible with video standards such as, for example, H.264. H.264 (also known as MPEG-4 part 10 or AVC, for advanced video coding) is a digital video codec standard, which is noted for achieving very high data compression. The H.264 project is intended to create a standard that would be capable of providing good video quality at bit rates that are substantially lower than those of previous standards (e.g. relative to MPEG-2, H.263, or MPEG-4 part 2), but still characterized by reduced complexity, which could otherwise render the design impractical (excessively expensive) to implement. Some MDC schemes, based on pre- and post-processing stages, have been proposed in order to make the multiple description generation independent of the actual video codec. For instance, it has been suggested to use the slice group coding tool available in H.264 in order to create two balanced descriptions. However, although the generated descriptions are indeed H.264 compliant, the use of the slice group modality impairs the compression efficiency.

Other related applications in the field of distributed storage and video streaming are the peer-to-peer systems, which, after the pioneering Napster, are becoming very popular in the Internet community. *BitTorrent* and *Kazaa* are just two example of peer-to-peer file sharing systems. Nevertheless, this popular softwares are generically designed for file sharing and cannot provide the real time properties required by the video applications.

The peer-to-peer technique has also been used to further improve the properties of video storage and streaming, e.g. the Microsoft CoopNet research project and the *Coolstreaming* IPTV. A peer-to-peer computer network is a network that relies primarily on computing power and bandwidth of the participants in the network; in particular, a pure peer-to-peer network does not have the notion of clients or servers, but only equal peer nodes that simultaneously function as both "clients" and "servers" to the other nodes on the network.

However, in spite of all the advantages offered by the known technologies, several drawbacks have still to be overcome. For instance, many of the known technologies are not compliant with the novel H.264 video coding standard. Moreover, many of the known technologies do not offer an adequate quality of the video on the user side or, when good quality is offered, the download speed drastically decreases. Furthermore, many of the technologies known in the art do not offer the necessary robustness toward server and network crashes. Another drawback affecting the technologies known in the art for distributing videos relates to the fact that the hotspot areas drastically increases when very popular videos are requested by the users, leading some time to the collapse of the video distribution system. Finally, the technologies known in the art have revealed to be difficult to implement, since very complicated architectures are needed; accordingly, some of the known technologies are very often also revealed to be too expensive.

Accordingly, in view of the problems and/or drawbacks identified above, it is an object of the present invention to provide a communication system and method for video data allowing to overcome or at least to minimize the drawbacks affecting the prior art video communication technologies. In particular, it is an object of the present invention to provide a communication system and method for video data, which are fully compatible with common video standards, such as, for example, H.264 video coding standard. A further object of the present invention is that of providing a communication system and method for video data, allowing users of a network (over which said video data are distributed) to efficiently retrieve, download and play-out videos. Still a further object of the present invention is that of providing a communication system and method for video data, allowing the reduction of links overload and hotspot areas without penalizing the download speed. Another object of the present invention is that of providing a communication system for video data offering adequate robustness toward server and network crashes, and allowing to limit the hotspot areas, especially in those cases in which very popular videos are requested. A further object of the present invention is also that of providing a communication system and method for video data allowing the creation of a practically unlimited distributed storage resource and offering adequate scalability with respect to the download/video decoding and display capacity of the user's devices. Finally, a further object of the present invention is that of providing a communication system and method for video data, allowing to be implemented at reasonable costs.

### SUMMARY OF THE PRESENT INVENTION

According to the present invention, this is obtained by means of a system and a method for the distributed storage and retrieval of video data, wherein the video data are encoded according to the "multiple description coding" paradigm. In such a way, the video content is encoded on a certain number M of different descriptions, which are mutually refinable. This means that each description can be used to improve the video quality at the decoder, i.e. at the users site; upon reception of any single description, a low quality but still acceptable, video signal is retrieved. Moreover, the video quality increases with the number of decoded descriptions, independently on the actual pattern of decoded descriptions.

In particular, according to a first embodiment of the present invention, the drawbacks and/or problems affecting the prior art technologies are overcome or at least minimized by means of a communication system for video data as claimed in claim 1, namely a communication system for video data, comprising means for generating one or more redundant representations of said video data or part of it, and means for generating video descriptions of said video data, based on said one or more redundant representations.

According to a further embodiment of the present invention, a communication system is provided as claimed in claim 2, namely a communication system, wherein the video data are a video sequence of video frames or slices.

According to still a further embodiment of the present invention, a communication system is provided as claimed in claim 3, namely a communication system further comprising means for generating a non-redundant representation of each frame or slice of the video sequence.

According to a further embodiment of the present invention, a communication system is provided as claimed in claim 9, namely a communication system wherein the redundant representations of the same frame or slice have different level of fidelity.

According to a further embodiment of the present invention, a communication system is provided as claimed in claim 12, namely a communication system wherein each of said video description is a sequence of redundant and non-redundant representations.

According to still another embodiment of the present invention, a communication system is provided, namely a communication system wherein the number of said redundant representations for each of said frames or slices is constant for all said frames or slices of said video sequence.

Finally, according to a further embodiment of the present invention, a communication method is provided as claimed in claim 32, namely a communication method for operating a communication system comprising one or more clients adapted to receive one or more video descriptions, said method comprising the steps of a client sending a video request to a server (for instance a main server), the main server providing to said client a list of servers offering the requested video service, said client establishing connections to the servers offering the requested video service and retrieving the video descriptions from the different servers.

Further embodiments, features and/or details of the present invention are defined in the dependent claims.

### BRIEF DESCRIPTION OF THE DRAWINGS

In the following, a description will be given with reference to the drawings of particular and/or preferred embodiments of the present invention; it has, however, to be noted that the present invention is not limited to the embodiments disclosed but that the embodiments disclosed only relate to particular examples of the present invention, the scope of which is defined by the appended claims. In particular, in the drawings:
Figure 1 relates to a schematic view of a "multiple description coding" system according to a first embodiment of the present invention;
Figure 2 relates to a schematic view of an example of the way "descriptions" of video frames or slices belonging to a video sequence are generated according to the present invention;
Figure 3 relates to a schematic view of an example of the way multiple "video descriptions" of a video sequence are generated according to an embodiment of the present invention;
Figure 4 relates to a schematic view of an example of a distributed communication system for video data according to an embodiment of the present invention; and
Figure 5 relates to a schematic view of a further example of a distributed communication system for video data according to a further embodiment of the present invention.

### DETAILED DESCRIPTION

While the present invention is described with reference to the embodiments as illustrated in the following detailed description as well as in the drawings, it should be understood that the following detailed description as well as the drawings are not intended to limit the scope of the present invention to the particular illustrative embodiments disclosed, but, rather the described illustrative embodiments merely exemplify the various aspects of the present invention, the scope of which is defined by the appended claims.

As apparent from the disclosure as given above, the present invention is based on the consideration that video data can be adequately distributed, stored and played out if these video data are encoded according to a "multiple description coding" paradigm; in such a way, the video content is encoded on a certain number M of different descriptions which are mutually refinable. This means that each description can be used to improve the quality at the decoder site, i.e. at the user site; upon reception of any single description, of low quality but still acceptable, video signal is retrieved. The video quality increases with the number of decoded descriptions, independently on the actual pattern of decode descriptions.

The M descriptions can be stored and/or streamed by different "distributed video servers" (DVS) or "distributed video peers" (DVP), connected to a telecommunication network. A client that needs to retrieve a certain video sequence, in the following also referred to as the "distributed video client" (DVC), can request different descriptions from different locations; to this end, it suffices that a reception buffer is provided on the DVC site, in order to smooth out the different DVS or DVP transmission delays and jitters and synchronize the M video descriptions. The multiple descriptions paradigm guarantees that the DVC can play the video sequence with a quality which depends only on the number of correctly and timely received streams; DVC can play-out a reduced, but still acceptable, quality video, even in the presence of a single connection. As a consequence, the distributed video storage and streaming approach according to the present invention is completely tolerant to DVS/DVP outage or connection dropping.

According to the present invention, each video frame or slice, i.e. part of a frame, is encoded in a plurality of modes. In particular, that means that each frame or slice is represented by means of one "primary slice description" (PSD) and M-1 "redundant slice descriptions" (RSDs); each description is identified by the redundant counter "r ∈ [0, M-1], being r = 0 associated with the PSD and r =1, ..., M-1 with the RSDs. Each description corresponds to a certain representation of a frame or slice with a decreasing level of fidelity as long as r increases. The M slice descriptions are the basic data units that can be exchanged between DVS and DVC. PSD and RSDs are created according to any standard video recording technique. In most cases, the adopted compression strategy is based on the common hybrid transform and motion prediction/compensation technique, e.g. MPEG-1, MPEG-2, MPEG-4, H.261, H.263 and H.264 device coding standard. In such a case, the video slices are encoded in "Intra" (I) mode (when the temporal prediction is not exploited) or "Predictive" (P) mode (when the current slice is encoded differentially with respect to a predicted frame, which has been encoded previously). Most video coding standards include the "Bi-directional" (B) mode as well. PSD and RSD can be used in the case of B-slice as well; in such a case, the technique described for P slices in the following can be used for B slices without any modification. On the other hand, since B-slices can be skipped by the decoder without error propagation, the use of RSD for B slices can be avoided without impacting on the functionality of the proposed invention. The PSDs are standard compressed slices of frames, yielded by a certain encoder at a given coding rate or quality parameter. The corresponding RSDs are obtained according to the following procedure:
- I slice:: RSD with *r* = *ro* is an alternative description of a video slice, obtained with standard encoding at a reduced rate or quality parameter with respect to the PSD and RSDs with *r* < ro, corresponding to the same slice.
- P slice:: RSD with r = ro is an alternative description of a video slice, obtained by temporal prediction from PSDs, which belong to frames encoded previously. The RSD is characterized by a lower rate and/or quality parameter with respect to the PSD and RSDs with *r* < ro, corresponding to the same slice.

It is important to observe that the RSDs are not used for future prediction and therefore do not need to be stored in the reference frame buffer. As a consequence, on the decoder side the motion compensation can be reversed perfectly only in case all the PSDs are received and correctly decoded; on the other hand, one may substitute a certain PSD with the corresponding RSD in the same spatial location; the introduced mismatch in the prediction loop will lead to a decoding drift, whenever the RSD is used as reference for motion compensation. Nevertheless, this drift is limited because PSD and RSD refer to the same spatial location. Moreover, the RSD drift can be further controlled by properly tuning the RSD coding rate and the frequency of I frames which, being encoded/decoded independently, re-synchronize the encoder and the decoder.

Nowadays, the H.264 video coding standard is the only one including syntax elements able to specify and handle redundant representations of the slices. The presence of redundant representations can be signaled by means of *redundant_pic_cnt_present_flag* and *redundant_pic_cnt;* this latter syntax element has the same meaning as the index r introduced in the present document. Therefore, the proposed MDC approach can be implemented keeping compatibility with respect to the H.264 standard. Nevertheless, the proposed MDC is quite general and can be used in any existing standard by extending the syntax properly or using external data fields to communicate the required parameters.

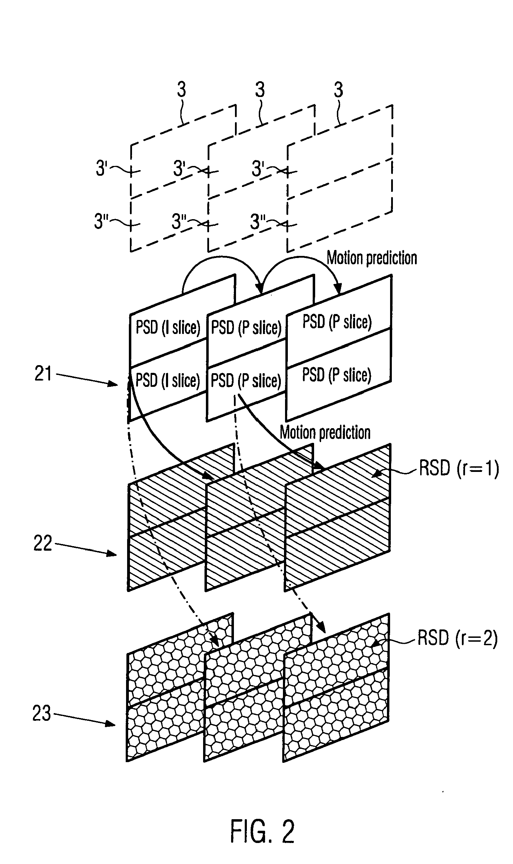

In the following, with reference to figure 2, an example will be disclosed of the way video frames or slices belonging to a video sequence are coded according to the present invention; in the example depicted in figure 2, it is assumed that M = 3. Accordingly, each PSD is accompanied by two corresponding RSDs, encoded with lower fidelity. In particular, in figure 2, the frames of a video sequence (schematically depicted with dashed lines) are identified by the reference numeral 3; as apparent from figure 2, each frame is divided into two slices 3' and 3". Accordingly, it is each slice 3' and 3" which is coded or, in other words, it is on the basis of each slice 3' and 3" that a PSD and two RSDs are generated; however, it has to be noted that the following disclosure also applies to the case in which the frames are not divided into two slices; in this case, for each frame 3, one PSD and two RSDs are generated. As apparent from figure 2, for each slice 3' and 3" (either a I slice or a P slice), a corresponding PSD 21 is generated, together with a first RSD 22 and a second RSD 23.

In figure 2, the different patterns indicate the different fidelity of the PSD and the RSDs; in particular, the different patterns in figure 2 are to indicate that the RSD1 have a lower fidelity than the PSD, and that the RSD2 have a lower fidelity than the RSD1.

Figure 2 schematically summarizes the way descriptions are generated according to the present invention for each frame or slice of a video sequence. Although, in the example depicted in figure 2, three descriptions are generated for each frame or slice (in figure 2, M is assumed to be equal to 3 so that one PSD description and two RSD descriptions are generated), it has to be noticed that, according to the present invention, M may assume any value; for the purpose of the present invention, it is only important to note that for each predefined value of M, corresponding M descriptions are generated, namely 1 PSD description and M-1 RSD descriptions.

According to the present invention, once the M PSD/RSDs descriptions for each slice or frame of a video sequence have been generated as disclosed above, M "video descriptions" (VD) with similar rates and distortions are also created; in particular, this is obtained by generating a sequence of PSD/RSDs, avoiding that the same representation of a certain slice or frame appears in more than one VDs. This solution prevents the insertion of any data duplication in the different VDs, thus maximizing the mutual refinability of the VDs. In particular, this is obtained by creating M VDs using the M possible circular shifts of the M PSD/RSDs of each slice or frame. Given the overall coding rate R, measured in bits per second (bps), which takes into account all the PSDs and RSDs, the obtained VDs have a coding rate of R/M bps.

The procedure according to which VDs are created is summarized by table 1 below relating to the case of M = 3.

| | slice 0 | slice 1 | slice 2 | slice 3 | slice 4 | slice 5 |
|---|---|---|---|---|---|---|
| VD-A (*v* =*0*) | 0 | 1 | 2 | 0 | 1 | 2 |
| VD-B (*v* =1) | 1 | 2 | 0 | 1 | 2 | 0 |
| VD-C (*v* =2) | 2 | 0 | 1 | 2 | 0 | 1 |

As apparent from table 1 above, the sequence of numbers associate with each of the three VDs represents the value of r of the slices included in a given VD. VD-A uses the natural sequence r = (0,1,2), i.e. PSD for the first slice, RSD with r = 1 for the second, and so on. VD-B and VD-C follow the same approach with the remaining two circular shifts of the r sequence. Each VD is labeled with a VD identifier (VDI) v ∈ [0, M-1], which indicates the number of circular shifts starting from the ordered sequence of r. As apparent from table 1 above, for each slice or frame, three descriptions are generated, for instance, for the slice 0, a PSD is generated together with a RSD (r =1) and a RSD (r =2). Moreover, these three descriptions are inserted into three corresponding video descriptions VD-A, VD-B and VD-C. In particular, the PSD description of the slice 0 is inserted into the video description VD-A, whilst the two RSD descriptions are inserted into the VD-B and VD-C descriptions, respectively. The same applies also to the other slices listed in table 1 with the only difference being that different PSD and/or RSD descriptions are inserted into corresponding different video descriptions.

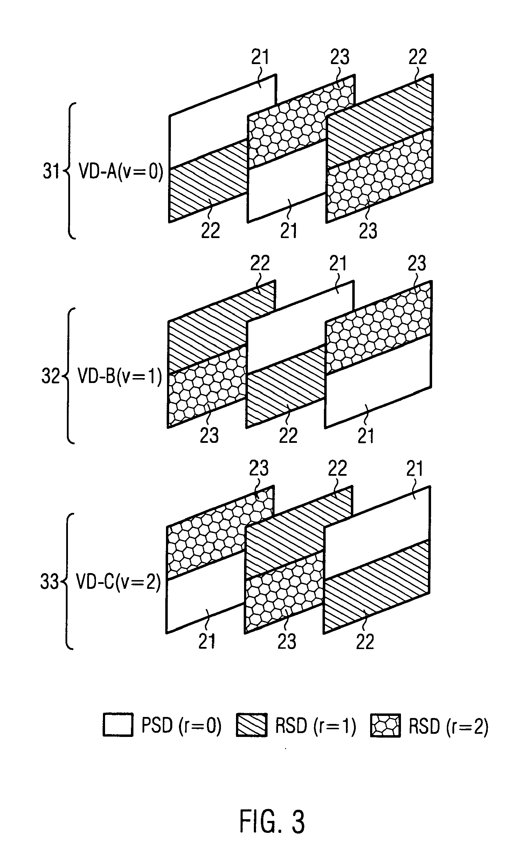

The graphical representation of the way VDs are created is given in figure 3, wherein like features already described with reference to figure 2 are identified by like reference numerals.

In the example depicted in figure 3, it is assumed that each frame (not depicted in the figure) is split into two slices as already represented in figure 2. Moreover, two RSDs are created for each slice, i.e. a RSD (r = 1) and a RSD (r =2) are created for each slice together with a PSD (r = 0). The two descriptions RSD (r = 1) and RSD (r = 2) are identified by the reference numerals 22 and 23, respectively, while the PSDs are identified by the reference numeral 21. Moreover, in figure 3, reference numerals 31, 32 and 33 identify three video descriptions as generated according to the present invention, for instance, the video descriptions VD-A, VD-B and VD-C listed in table 1 above, respectively.

As apparent from figure 3, three VDs with a similar rate and distortion are created by interlacing the alternative representations of each slice. Clearly, the substitution in a video description VD of a PSD with a RSD will lower the decoded quality in the case of single description reception; on the other hand, if more than one VD is received, the first slice representation, the one with the higher value of r can be picked up and recorded for play-out.

The use of the best available representation is essential in the case of slices which are used for future prediction, i.e. I/P slices, in order to limit the decoder drift when a limited number of VDs is available. The RSD of a B-slice, if present, can be used to decode a reduced quality frame but it will not generate errors on the remaining part of the video. Moreover, if neither PSD nor RSDs of a B slice are available the decoder can move to the next slice or frame without any error propagation effect. Therefore, if the users can afford skipping some frames (this can be usually done when the frame rate of the video sequence is sufficiently high) the B slices can be coded with a single PSD. In this latter case the B PSD can be cyclically distributed among all the VDs in order to form descriptions with even rates. In conclusion, according to the present invention, one PSD and M-1 RSDs are mandatory in the case of I and P slices; for B slices the use of the RSDs is optional.

With the following disclosure, it will become apparent that the multiple VDs depicted in figure 3 and listed in table 1 are adapted to be transmitted to several video clients, for instance over a communication network and through corresponding different paths.

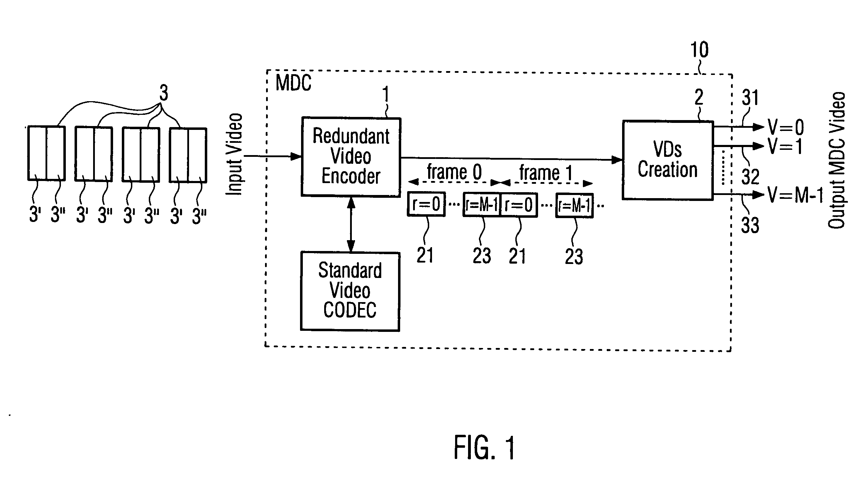

In particular, in the following, with reference to figure 1, a possible implementation of a MDC system according to the present invention will be disclosed; again, in figure 1, like features already described with reference to previous figures, are identified by like reference numerals. Accordingly, reference numeral 3 identifies video frames of a video sequence, each of these video frames being divided as an example into two video slices 3' and 3". Moreover, reference numerals 21 and 23 identify descriptions of the frames 3, or slices 3' and 3" generated as disclosed above, i.e. either PSD or RSD descriptions. Moreover, reference numerals 31 to 32 and 33 identify the M corresponding video descriptions generated as disclosed above, for instance, the video descriptions schematically represented in figure 2 or listed in table 1.

The MDC system 10 schematically depicted in figure 1 works as follows. During a first step, a standard video encoder 1 is used to generate the one PSD and M-1 RSDs. The output of this step is the creation of a compressed video stream containing redundant information. During a second step, this redundant information is spread over the M video descriptions VDs, as specified above; in particular, this is done by using means 2 adapted to this end.

This second step can be regarded as a post-processing step of the compressed video stream. In this respect, it has to be pointed out that most video standards include the information needed to set-up the decoder, e.g. frame size, color space, coding parameters etc, in some initial headers. These headers are included in each VDs in order to permit separately the decoding of VDs. Moreover, the duplication of this information in all the VDs is a source of robustness to transmission errors. Finally, in the case of broadcast applications, such data are usually retransmitted periodically, e.g. with every new I frame in order to initialize any new listening client. The MDC system depicted in figure 1 can, therefore, operate in real-time, depending on the computational cost of the adapted video coder and the number of redundant representations.

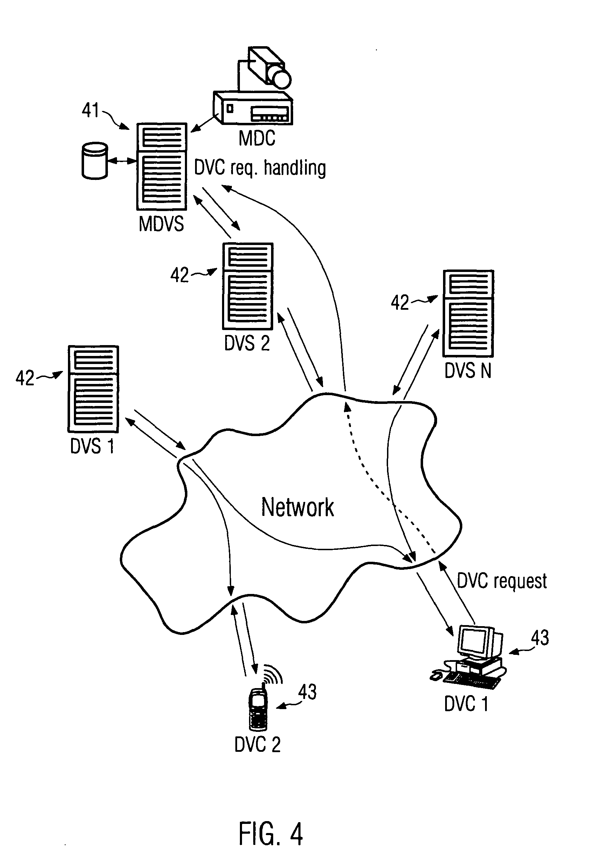

In the following, with reference to figure 4, a first embodiment of a communication system according to the present invention will be disclosed. In figure 4, reference numeral 42 identifies a plurality of distributed video servers (DVS), whilst reference numeral 43 identifies a plurality of distributed video clients (DVC). Moreover, reference numeral 41 identifies a main-DVS (MDVS).

In the communication system schematically depicted in figure 4, the video data are encoded by the multiple description coder (MDC), for instance, the MDC 10 depicted in figure 1; the encoding task can be performed offline or in real-time depending on the nature of the video source. The VC1, which is interested in a certain video, sends a distributed video service request (DVSR) to the main-VDS (MDVS), which keeps a list of the available video services and a list of the DVS providing each video service. The MDVS reply to the DVSR providing a list of DVS, offering the requested video service. Assuming that the requested video is coded with M descriptions, the DVC is able to establish a certain number of connections towards N ≤ M DVSs, that will stream complimentary and refinable descriptions of the video data. The same video can be retrieved by another DVC, e.g. DVC2 in figure 4; given the scalability of the MDC, the DVC2 may request a single description to match its bandwidth constraint.

In the following, the functions exploited by the different component parts depicted in figure 4 will be disclosed in detail.

The DVS are in charge of the video distribution in the distributed fashion, enabled by the MDC paradigm. The DVS are divided into two categories:
- MDVS:: is the master server. The role of the MDVS is to store and keep updated the Distributed Video Service Table that is used to store all the required information about the video data managed by the MDVS.
- DVS:: is the actual streaming server, in charge of the video data transmission towards the DVC.

A single apparatus can serve as both MDVS and DVS; in fact, MDVS and DVS can be implemented as two services running on the same physical device. Nevertheless, most of the advantages, yielded by the present invention, come from the ability to distribute the video content across a number of geographically separated and heterogeneous devices, acting as DVS.

The MDVS offers the following services:
• Store and update the Distributes Video Service Table. An example of such a table is reported in table 2 below:

| ID | info | live | format | R [kbps] | M | DVS list | | | |
|---|---|---|---|---|---|---|---|---|---|
| | | | | | | DVS | *v* | DVS | *v* |
| 0 | News | yes | H.264 | 384 | 2 | 130.192.4.1 | 0,1 | 121.45.123.86 | 0 |
| 1 | Sport | no | H.264 | 128 | 4 | 124.87.5.5 | 0,1 | 153.54.13.13 | 2,3 |
| 2 | Movie | no | MPEG-2 | 1024 | 3 | 130.192.4.1 | 0,1,2 | 113.43,17.17 | 0,1,2 |

The MDVS must store a list of the available video sequences, which are recognized by means of numerical identifier, accompanied by some textual information to help program selection by final users. For each video sequence the MDVS stores whether the service is live or off-line, the compression format, the overall coding rate R, the number M of the available VDs and the list of the DVSs able to stream the VDs. For each DVS the MDVS store the list of the available VIDs v, as well.
• Manage the distribution of the VDs across the DVSs under its control. The distribution policy may be driven by the DVSs hardware capability, users' requests, etc. and it is left to the actual system designer. The MDVS can add or delete or modify the VDs offered by any DVS under its control. Moreover, in case of live video sequences the MDVS must feed the DVS with synchronized VDs. In case of off-line video data the VDs can be stored locally in the various DVSs.
• Manage the DVC requests (DVC requests types are detailed in the following).

The DVS offers the following services:
• Receive VDs from the MDVS.
• Stream the requested VDs to DVC.
• Store and update a list of the available VDs.
• Manage the DVC channel probing requests (see details in the following).

The DVC is the apparatus that enables the video play-out on the final user device.

The DVC requests a particular video service to the MDVS, and later on sets up the connections with the DVSs; finally, the DVC processes the received VDs so as to be interfaced with a standard video decoder and play-out device.

The first step that the DVC exploits in order to set-up a streaming session is to establish a connection with the MDVS and place one of the following requests:
- Request the complete list of video services. The MDVS reply with a list of the available video services, sending the video identifiers, the textual descriptions of each service, the compression format, the number of descriptions M and the overall rate R. The DVC cannot start the session if the video compression format is not supported in the device or the DVC maximum download bandwidth is lower than the minimum streaming rate R/M bps, corresponding to a single VD.
- Retrieve the data needs to set-up a distributed streaming session for the video sequence of interest by means of Distributed Video Service Request (DVSR) for a particular video identifier. The MDVS replies with the line in the Distributed Video Service Table containing the list of the DVSs able to stream the video. If the video is no longer available an error message is generated by the MDVS.

The second step is the set up of the actual streaming session with a certain number N ≤ M of DVSs, providing the video of interest. This goal is achieved through the following steps:
1. Test the reliability and bandwidth of the connections toward the DVSs having some VDs of interest. Depending on the nature of the telecommunication network, a certain number of DVS selection criteria (a priori knowledge of DVS reliability and or geographical position, etc.) may be applied. Then, the DVS are probed in terms of bandwidth, transmission delay, jitter and packet loss probability. If a DVS fails to supply the minimum rate, i.e. that of a single description at R/M bps, this is removed from the list of the available DVSs. Finally, the DVC selects a set of N ≤ M DVSs.
2. Request complementary VDs from the selected DVSs, depending on the offered bandwidth. A certain VD is identified by means of the video sequence index it belongs to and the VDI index v.
3. DVC handle N connections from the DVSs, properly buffers the incoming PSDs/RSDs so as to take into account DVS delays and jitters. The best representation of each slice, i.e. that with the higher r is forwarded to the standard video decoding and play-out chain, available in the device. PSD/RSDs that are received later than the play-out deadline are discarded. Depending on the characteristics of the network, the DVC may need to manage PSD/RDSs that arrive out of order, as well.

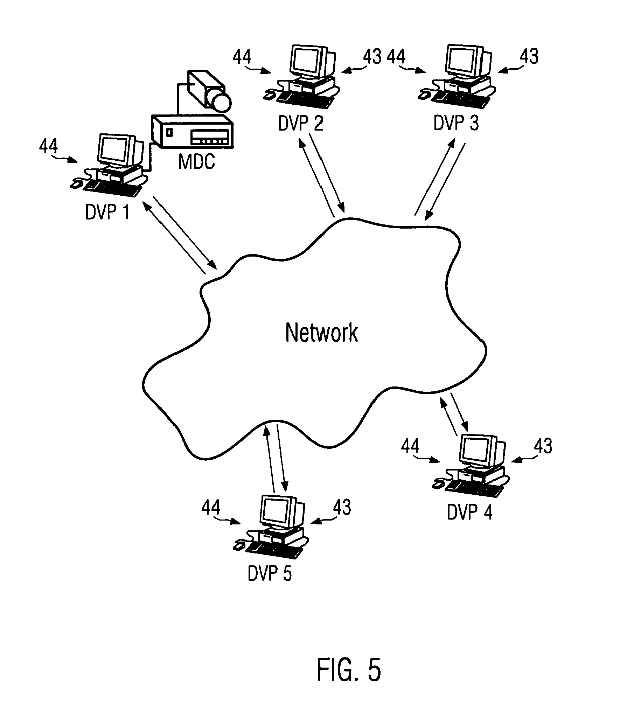

A further embodiment of a communication system for video data according to the present invention is depicted in figure 5. in the case of this embodiment, there is no longer a hierarchical distinction between DVS and DVC, and the video streaming service is offered by means of an ad-hoc peer-to-peer network. The peers denoted as DVPs and identified by the reference numeral 44 are adapted to act like both video provides and consumers. In particular, in figure 5, a possible peer-to-peer video streaming example, with M = 2 descriptions is shown; DVP1 acts as a server and streams two different descriptions of the same video sequence to VDB2 (description A) and DVP5 (description B). DVP2 improves its video quality of a second connection with DVP3 which streams the complementary description B. On the other hand, DVP2 complements the video signals available in DVP3 streaming the description A. By means of this collaborative and distributed approach, all the DVPs in figure 5 can receive two descriptions of the video.

The DVPs are apparatuses that can behave like both DVS and DVC in the context of a peer-to-peer network. Since peer-to-peer networks are generally characterized by a variable number of nodes that can be temporarily unavailable, the use of MDVS can be substituted by a proper distributed communication protocol such as gossip-based protocols or protocols employing hierarchical distribution trees, able to cope with dynamically varying network topologies. The gossip-based protocols are indeed able to manage subscription, unsubscription, and streaming request in a distributed fashion without the need of a central node.

In conclusion, it arises from the disclosure given above that the communication system and method according to the present invention allowed to overcome, at least partially, the problems affecting the prior art technologies. In particular, the communication system and method according to the present invention are fully compatible with the novel H.264 video coding standard. Moreover, the communication system and method according to the present invention allow to increase the robustness toward the server and network crises, and limit the hotspot areas in correspondence of very popular videos. Furthermore, the communication system and method according to the present invention allows the creation of a practically unlimited distributed storage resource and the scalability with respect to the download/video decoding and display capacity of the user's device.

Of course, it should be understood that a wide range of changes and modifications can be made to the embodiments described above without departing from the scope of the preset invention, it has, therefore, to be understood that the scope of the present invention is not limited to the embodiments described but is defined by the appended claims.

## Claims

1. A communication system for video data, comprising:
means (1) for generating one or more redundant representations (22, 23) of said video data or part of it;
means (2) for generating video descriptions (31, 32, 33) of said video data, based on said one or more redundant representations.

2. A communication system as claimed in claim 1, wherein the video data are a video sequence of video frames (3) or slices (3', 3").

3. A communication system as claimed in claim 2, further comprising:
means for generating a non-redundant representation (21) of each frame (3) or slice (3', 3") of the video sequence.

4. A communication system as claimed in claim 3, wherein said non-redundant representation (21) is a primary slice description (PSD).

5. A communication system as claimed in one of claims 2 to 4, wherein one or more redundant representations of each video frame (3) or slice (3', 3") are generated, regardless of the coding mode.

6. A communication system as claimed in one of claims 2 to 4, wherein one or more redundant representations of each video frame (3) or slice (3', 3") are generated, if and only if a frame is encoded by means of Intra or Predictive modes.

7. A communication system as claimed in one of claims 2 to 4, wherein only one primary representation of each video frame (3) or slice (3', 3") is generated, if and only if a frame is encoded by means of a coding mode which produce a frame/slice that will not be used as a reference for prediction.

8. A communication system as claimed in one of the claims 2 to 4, wherein only one primary representation of each video frame (3) or slice (3', 3") is generated, only if a frame is encoded by means of Bi-predictive mode.

9. A communication system as claimed in claim 5, wherein the redundant representations (22, 23) of the same frame or slice have different level of fidelity.

10. A communication system as claimed in one of claims 5 and 9, wherein said redundant representations (22, 23) are redundant slice descriptions (RSDs).

11. A communication system as claimed in one of claims 3 to 10, wherein the non-redundant representation of a frame or slice has a higher level of fidelity as any redundant representation of the same frame or slice.

12. A communication system as claimed in one of claims 3 to 11, wherein each of said video descriptions (31, 32, 33) is a sequence of redundant and non-redundant representations.

13. A communication system as claimed in one of claims 3 to 12, wherein the redundant and non-redundant representations are generated adopting compression strategies based on the common hybrid transform and motion prediction/compensation techniques.

14. A communication system as claimed in one of claims 3 to 13, wherein the redundant and non-redundant representations are coded using MPEG-1, MPEG-2, MPEG-4, H.261, H.263 or H.264.

15. A communication system as claimed in claim 14, wherein the video frames or slices are encoded using a predictive scheme.

16. A communication system as claimed in claim 14, wherein the video frames or slices are encoded using Intra mode, Predictive mode or Bi-predictive mode.

17. A communication system as claimed in one of claims 2 to 16, wherein said frames or slices of said video sequence follow a consecutive time order.

18. A communication system as claimed in one of claims 5 to 17, wherein the number of said video descriptions is equal to the number of redundant representations for each of said frames or slices plus one.

19. A communication system as claimed in one of claims 1 to 18, further comprising:
means for transmitting said video descriptions over independent channels.

20. A communication system as claimed in one of claims 1 to 19, wherein the system is compatible with respect to the standard H.264.

21. A communication system as claimed in any of the previous claims, further comprising one or more servers (41, 42), to store and stream said video descriptions.

22. A communication system as claimed in claim 21, further comprising one or more clients (43, 44), adapted to receive one or more said video descriptions.

23. A communication system as claimed in claim 22, wherein the client is provided with a reception buffer in order to smooth out delays and jitters and synchronise the different video descriptions.

24. A communication system as claimed in claim 22, wherein the quality of the video sequence seen by the client depends only on the number of correctly received video descriptions.

25. A communication system as claimed in claim 21, wherein said servers represent a distributed system.

26. A communication system as in claim 22, wherein said clients represent a distributed system.

27. A communication system as claimed in claim 21, wherein one of said server is a main server, which keeps a list (50) of the available video services and the list of the servers providing each video service.

28. A communication system as claimed in claim 27, wherein each one of said clients is allowed to send a video request to said main server.

29. A communication system as claimed in one of claims 22 to 27, allowing one of said clients to establish connections to a certain number of said servers.

30. A communication system as claimed in one of claims 21 to 28, wherein each of said servers and clients can act at the same time as server or client, generating a peer-to-peer network (60).

31. A communication system as claimed in claim 30, wherein the peer-to-peer network employs a proper distributed communication protocol such as gossip-based protocols or protocols employing hierarchical distribution trees.

32. A communication method for operating a communication system comprising one or more clients (43, 44) adapted to receive one or more video descriptions as defined in one of the previous claims, said method comprising the steps of:
a client sending a video request to a server;
the main server providing to said client a list of servers offering the requested video service;
said client establishing connections to the server offering the requested video service and retrieving the video descriptions from the different servers.
